# EUROPEAN PATENT SPECIFICATION

(11) **EP 1 344 485 B1**
(45) Date of publication and mention of the grant of the patent: **06.04.2011**
(21) Application number: 01271170.1
(22) Date of filing: 19.12.2001
(51) Int. Cl.: A47L 13/58, A47L 13/257

(54) **MOP SQUEEZER**
MOPP-AUSWRINGVORRICHTUNG
Essoreuse pour un balai

(30) Priority: 19.12.2000 JP 2000404438; 27.01.2001 JP 2001059245; 07.09.2001 JP 2001317443; 09.11.2001 JP 2001382351
(43) Date of publication of application: 17.09.2003
(73) Proprietor: Takemoto, Takahira, Nagasaki-shi, Nagasaki 851-2211 (JP)
(72) Inventor: TAKEMOTO, Takahira, Nagasaki-shi, Nagasaki 851-2211 (JP); SUGIOKA, Shuji, Nagasaki-shi, Nagasaki 852-8031 (JP); KAWAZOE, Tuyoshi, Nisisonogi-gun, Nagasaki 851-2127 (JP); MORITAKA, Syuuzirou, Nagasaki-shi, Nagasaki 851-0115 (JP)
(74) Representative: Henkel, Feiler & Hänzel
(86) International application number: PCT/JP2001/011166
(87) International publication number: WO 2002/049493

(56) References cited:
- EP-A- 0 122 675
- EP-A- 0 645 297
- FR-A- 1 356 255
- GB-A- 1 434 169
- JP-U- 3 083 143
- JP-U- 50 006 152
- JP-U- 57 166 131
- JP-U- 60 086 255
- JP-U- 61 086 158
- JP-Y- 13 004 867
- JP-Y1- 26 011 384
- JP-Y1- 35 022 567
- JP-Y2- 2 032 222

## Description

### TECHNICAL FIELD

The present invention relates to a mop squeezer to be used for squeezing water out of a mop to be used for wiping and cleaning a floor etc., especially in a hospital, after the mop is washed by water.

### BACKGROUND ART

In wiping and cleaning the floor etc. in a hospital, it is especially required to remove the dust and dirt without rise of the dust for avoidance of internal infection like in-hospital infection. Nowadays, it is required to remove the dust and dirt more and more securely and cleanly than in the case using the conventional wiping and cleaning mop.

Thus, the inventors here are currently using such a mop as uses reproduced cellulose sponge (herein referred to as "a swing mop") for effecting a high dust recovery and remarkably reducing the number of sticking bacteria after cleaning so as to be appropriately employed for the abovementioned object.

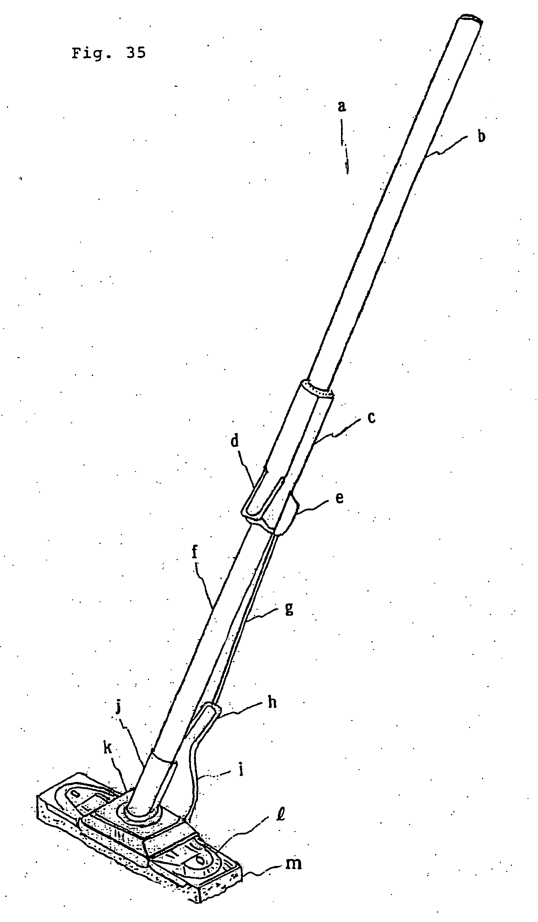

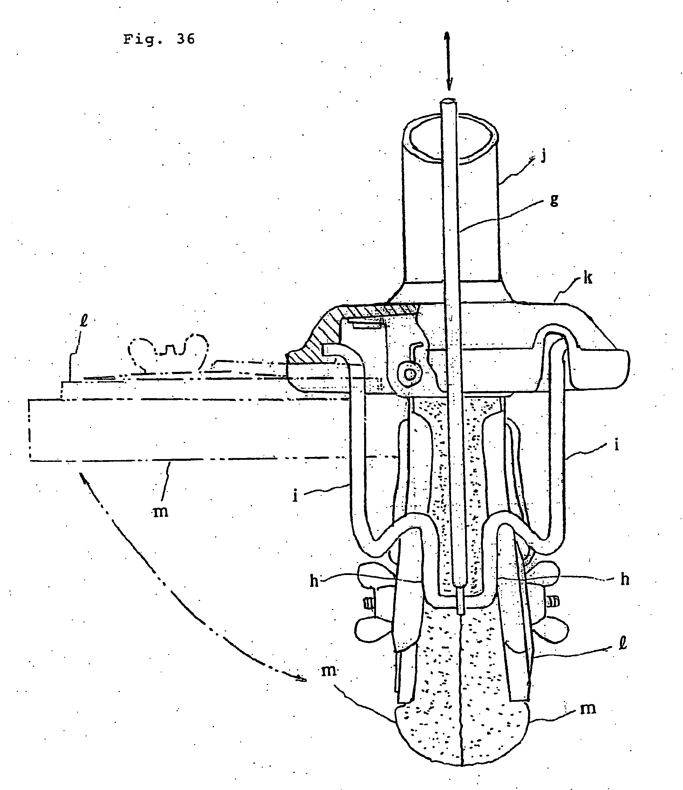

Figs. 35 and 36 illustrate the abovementioned swing mop a, wherein Fig. 35 is a perspective view and Fig. 36 is an enlarged side view of a mop portion of the swing mop a.

In Figs. 35 and 36, reference letters b to m designate parts and components, respectively, as follows:
b: a handle, c: a sliding grip handle, d: a thumb slot,
e: a linkage fit slot, f: a mop handle, g: a metal link rod,
h: a metal squeezing wire, i: a squeezing arm,
j: a handle socket, k: a shroud body, 1: a metal paddle, and
m: a sponge mop pad.

In handling the swing mop a, the metal paddle 1 together with the sponge mop pad m is moved, as shown in Fig. 36. That is, the metal paddle 1 and the sponge mop pad m attached thereto are usually in the horizontal position, as shown by the two dotted and dash lines. In this state, the sponge mop pad m is wetted and used for wiping the floor.

Thereafter, the sponge mop pad m is washed by wash water in a water tank (not shown). Then, when the water is to be removed of the sponge mop pad m, the sliding grip handle c is pushed down by hand along the mop handle f to thereby move the metal link rod g downward. Thus, the metal squeezing wires h, h and the squeezing arms i, i, both rotatably linked to the metal link rod g, rotate swingingly, as shown by arrows in Fig. 36, against spring force of a spring (not shown), so that the metal paddle 1 and the sponge mop pad m rotate to the vertical direction from the horizontal direction. Thereby, the sponge mop pads m, m (the left hand half and the right hand half in the figure) are folded together against each other and the water is squeezed off.

As this swing mop a is of such a type that the sponge mop pad m is doubled at its mid position, a large physical power is required therefor so that the power of workers performing the cleaning in a hospital etc., especially in case of female workers, is often not sufficient and a countermeasure to enable squeezing by a lighter power has been desired.

Thus, a simplified type of the above swing mop a is recently available in which the metal link rod g is eliminated and the metal squeezing wires h, h and the arms i, i are rotated downward so that the sponge mop pads m, m are folded. In this type of the mop, however, the water squeezing still requires a large physical power and a further improvement thereof is being desired.

Also, in the swing mop a, folding of the sponge mop pad m is repeated to thereby cause a severe deterioration of the pad and a countermeasure therefor has been desired.

Moreover, in the swing mop a, when the sponge mop pad m is folded, pressing force acting on the mutually opposed portions of the sponge mop pads m, m differs in the vertical direction in Fig. 36 or in the longitudinal direction of the sponge mop pads m, m, after folded, and the water content in the sponge mop pads m, m, after squeezed, is not homogenous so that there is caused an irregularity in wiping the floor. Hence, a countermeasure to ensure a homogenous water content in the sponge mop pads m, m to be used for wiping the floor has been desired.

EP-A-0645297 describes a foldable articulated dolly suitable for the transport and loading of room-cleaning and washing equipment. The dolly comprises a pair of frame members and a strut connected with the frame members such that an acute angle is formed between the strut and the frame members in an operative position of the dolly. A separate wringer entity for squeezing water from a sponge mop pad of a mop is supported in an overhang manner on a transverse frame fixing member of the strut.

GB-A-1434169 discloses another mobile apparatus for cleaning purposes of the kind comprising a frame provided with wheels and a drawer-bar, a bucket disposed on the frame and a press provided on the frame above the bucket for squeezing out wet mops or the like. The press comprises two substantially parallel rotatable rollers between which the mop can be squeezed and pulled. While one of the rollers is rotatably supported between two vertical frame members of the draw bar, the other roll is rotatably supported between the ends of a pair of arms which are rotatably supported on the frame such that pivoting of the arms approaches the one roll to the other and presses them against each other so that pulling of the mop through between the nip of the two rollers squeezes out the water.

FR-A-1356255 discloses a mob squeezer provided as an integral part of a bucket. The mop squeezer has a receiver plate rotatably supported between opposite sidewalls of the bucket. The sponge mob pad is compressed between the receiver plate and inwardly protruding corner portions of a rim of the bucket.

### DISCLOSURE OF THE INVENTION

The present invention provides a mop squeezer for squeezing water from a sponge mop pad of a mop and the mop squeezer comprises the features of claim 1. Preferred embodiments are defined in the dependent claims.

### BRIEF DESCRIPTION OF THE DRAWINGS

Fig. 1 is a perspective view of a mop with sponge of a first example serving to explain features of the present invention.
Fig. 2 is a perspective-view of a water tank of the first example
Fig. 3 is a perspective view of a mop with sponge of a second example serving to explain features of the present invention.
Fig. 4 is a perspective view of a water tank of the second example
Fig. 5 is a perspective view of a mop with sponge of a third example serving to explain features of the present invention.
Fig. 6 is a perspective view of a water tank of the third example.
Fig. 7 is a perspective view of a water tank of a fourth example serving to explain features of the present invention.
Fig. 8 is a front view of the water tank of Fig. 7.
Fig. 9 is a cross sectional side view of the water tank of Fig. 7.
Fig. 10 is a front view of a mop with sponge of the fourth example, wherein Fig. 10 is also a front view of a mop with sponge of a fifth example serving to explain features of the present invention shown in Fig. 13.
Fig. 11 is a side view of the mop with sponge of Fig. 10.
Fig. 12 is a function explanatory view of the fourth example.
Fig. 13 is a perspective view of a water tank of the fifth example.
Fig. 14 is a front view of the water tank of Fig. 13.
Fig. 15 is a cross sectional side view of the water tank of Fig. 13.
Fig. 16 is a function explanatory view of the fifth example.
Fig. 17 is a perspective view of a mop squeezer of a sixth example serving to explain features of the present invention.
Fig. 18 is a front view of the mop squeezer of Fig. 17.
Fig. 19 is a function explanatory view of the sixth example.
Fig. 20 is a side view of the mop squeezer of Fig. 17 showing the state where the mop squeezer is mounted on a carriage.
Fig. 21 is a front view of the mop squeezer of Fig. 20.
Fig. 22 is a rear view of the mop squeezer of Fig. 20.
Fig. 23 is a side view of a mop squeezer, mounted on a carriage, of a seventh example serving to explain features of the present invention.
Fig. 24 is a front view of the mop squeezer of Fig. 23.
Fig. 25 is a rear view of the mop squeezer of Fig. 23.
Fig. 26 is a perspective view of a mop squeezer of an eighth example serving to explain features of the present invention.
Fig. 27 is a side view of the mop squeezer of Fig. 26.
Fig. 28 is a function explanatory view of the mop squeezer of Fig. 26.
Fig. 29 is a side view of a mop squeezer of a ninth example serving to explain features of the present invention.
Fig. 30 is a side view of the mop squeezer of Fig. 29 showing the state where the mop squeezer is folded.
Fig. 31 is a side view of a mop squeezer of a tenth example serving to explain features of the present invention.
Fig. 32 is a front view of the mop squeezer of Fig. 31.
Fig. 33 is a side view of the mop squeezer of Fig. 31 showing the state where the mop squeezer is folded.
Fig. 34 is a front view of a mop squeezer of an embodiment according to the present invention.
Fig. 35 is a perspective view of a mop with sponge in the prior art.
Fig. 36 is an enlarged perspective view of a mop portion of the mop with sponge in the prior art.

### BEST MODE FOR CARRYING OUT THE INVENTION

Herebelow, the present invention will be described more concretely based on examples serving to explain certain features of the invention and an embodiment according to the present invention with reference to the appended figures.

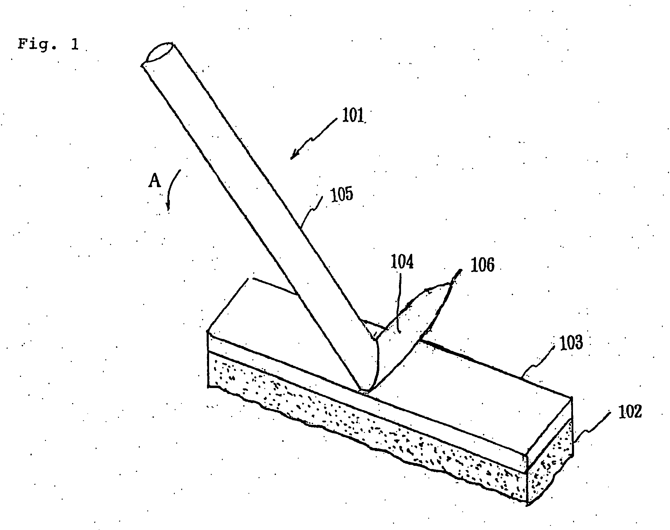

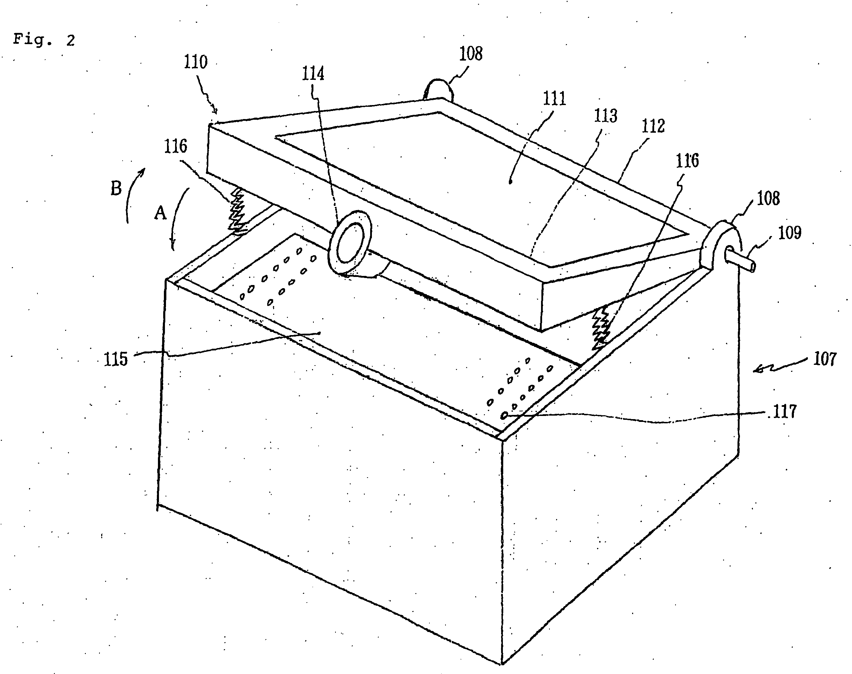

Figs.1 and 2 illustrate a first example . In Fig. 1, numeral 101 designates a mop with sponge, numeral 102 designates a sponge mop pad, numeral 103 designates a metal plate that fixedly holds the sponge mop pad 102 and numeral 104 designates a fixing lever that fixes a mop handle 105 to the metal plate 103. Numeral 106 designates an insert lever that has a sharpened end and extends from the fixing lever 104 so as to project beyond the metal plate 103.

In Fig. 2, numeral 107 designates a box-like water tank that has its upper surface opened and stores therein wash water (not shown). Numerals 108, 108 designate semi-circular projections that are provided at upper surface corner portions of the water tank 107 and have centrally bored holes in which a rotating shaft 109 is rotatably supported. Numeral 110 designates a compression frame member that has its upper surface portion provided with a hollow 111, has its one side end, that is, a rear frame member, 112 fixed with the rotating shaft 109 and has a central portion of the other side end, that is, a front frame member, 113 fixedly provided with an insert ring 114. Numeral 115 designates a compression receiver plate that is provided at an upper middle position in the water tank 107 so as to oppose to the insert ring 114. Here, the minimum gap between the compression frame member 110 and the compression receiver plate 115 is set to such a size as realizes an appropriate thickness of the sponge mop pad 102 by the compression. Numerals 116, 116 designate springs that are provided between upper side end portions of the water tank 107 and the compression frame member 110. The springs 116, 116 in their natural state act on the compression frame member 110 so that the compression frame member 110 on its one side is lifted to be kept apart from the water tank 107 in that state. Numeral 117 designates a plurality of drain holes bored in the compression receiver plate 115. In stead of the drain holes, a plurality of drain grooves may be provided.

In the first example constructed as mentioned above, the sponge mop pad 102 of the mop with sponge 101 is immersed into the wash water through the hollow 111 of the compression frame member 110 and the sticking dust and dirt of the sponge mop pad 102 are washed off. Then, the insert lever 106 of the mop with sponge 101 is inserted into the insert ring 114 of the compression frame member 110 and the mop handle 105 is rotated in the direction of arrow A in Figs. 1 and 2 against the spring force of the springs 116, 116. Thereby, the sponge mop pad 102 is pinched to be compressed between the compression frame member 110 and the compression receiver plate 115, so that the sponge mop pad 102 is squeezed to realize a desired water content therein appropriate for the wiping. The squeezed water falls down flowing through the plurality of drain holes 117 of the compression receiver plate 115 or flowing aside the compression receiver plate 115 to be stored in the water tank 107.

When the insert lever 106 of the mop with sponge 101 is pulled out of the insert ring 114, the compression frame member 110 is lifted to rotate in the direction of arrow B in Fig. 2 by the spring force of the springs 116, 116.

It is to be noted that, while the insert lever 106 is provided on the mop with sponge 101 side and the insert ring 114 on the compression frame member 110 side in the present example, the insert lever may be provided reversely on the compression frame member 110 side and the insert ring on the mop with sponge 101 side.

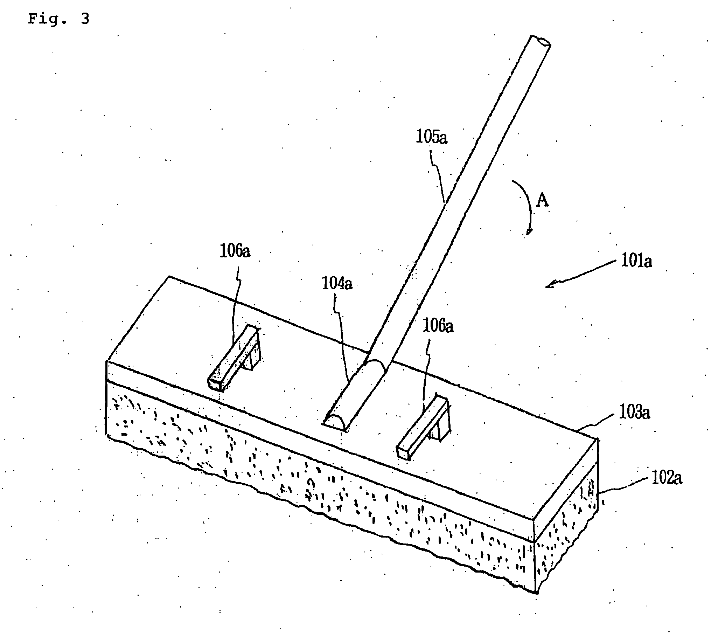

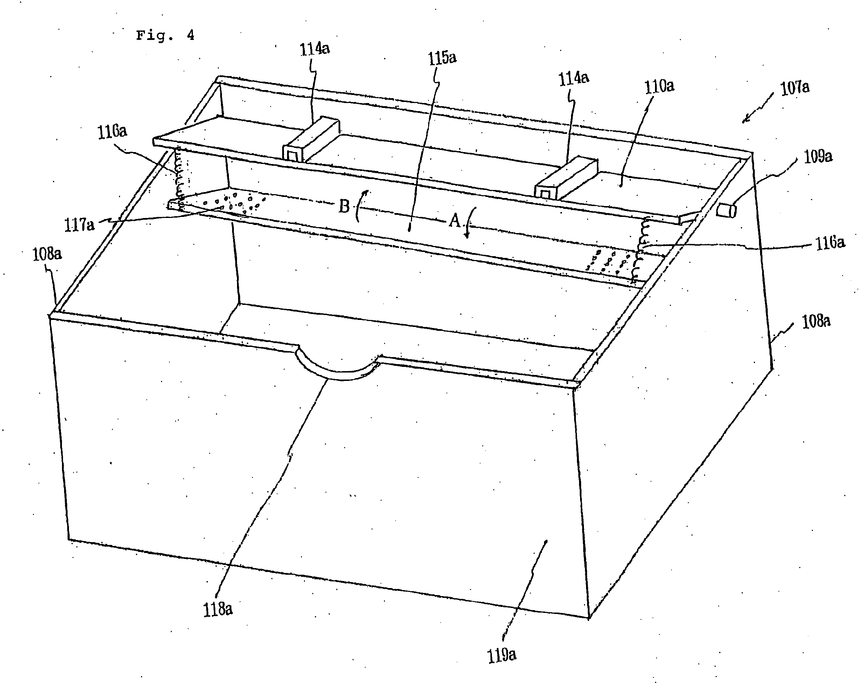

Figs. 3 and 4 illustrate a second example . In Fig. 3, numeral 101a designates a mop with sponge, numeral 102a designates a sponge mop pad, numeral 103a designates a metal plate that fixedly holds the sponge mop pad 102a and numeral 104a designates a fixing lever that fixes a mop handle 105a to the metal plate 103a. Numerals 106a, 106a designate insert levers that are fixedly provided to the metal plate 103a on both sides of the fixing lever 104a so as to project from the metal plate 103a. While two pieces of the insert lever 106a are provided in Fig. 3, one piece at the central position or three or more pieces thereof may be provided on the metal plate 103a.

In Fig. 4, numeral 107a designates a box-like water tank that has its upper surface opened and stores therein wash water (not shown). Numerals 108a, 108a designate side plates of the water tank 107a. The side plates 108a, 108a have holes bored in upper side end portions of the side plates 108a, 108a in which a rotating shaft 109a is rotatably supported. Numeral 110a designates a compression presser plate that has its one side end fixed with the rotating shaft 109a and its upper surface provided with insert tubes 114a, 114a at the corresponding position of the insert levers 106a, 106a fixed to the metal plate 103a of the mop with sponge 101a. In Fig. 4, while two pieces of the insert tube 114a are provided, one piece at the central position or three or more pieces thereof may be provided on the compression presser plate 110a. Numeral 115a designates a compression receiver plate that is inclinedly provided at an upper middle position in the water tank 107a. Here, the minimum gap between the compression presser plate 110a and the compression receiver plate 110a is set to such a size as realizes an appropriate thickness of the sponge mop pad 102a by the compression. Numerals 116a, 116a designate springs that are provided between peripheral side end portions of the compression presser plate 110a and the corresponding portions of the compression receiver plate 115a. The springs 116a, 116a in their natural state act on the compression presser plate 110a so that the compression presser plate 110a on its one side is lifted to be kept apart from the compression receiver plate 115a in that state. Numeral 117a designates a plurality of drain holes bored in the compression receiver plate 115a. Instead of the drain holes, a plurality of drain grooves may be provided. Numeral 118a designates a cut portion, on which the mop handle 105a abuts, provided in an upper peripheral central portion of a front plate 119a of the water tank 107a.

In the second example constructed as mentioned above, the sponge mop pad 102a of the mop with sponge 101a is immersed into the wash water and the sticking dust and dirt of the sponge mop pad 102a are washed off. Then, the insert levers 106a, 106a of the mop with sponge 101a are inserted into the insert tubes 114a, 114a of the compression presser plate 110a and the mop handle 105a is rotated in the direction of arrow A in Figs. 3 and 4 against the spring force of the springs 116a, 116a. Thereby, the sponge mop pad 102a is pinched to be compressed between the compression presser plate 110a and the compression receiver plate 115a, so that the sponge mop pad 102a is squeezed to realize a desired water content thereof appropriate for the wiping. The squeezed water falls down flowing through the plurality of drain holes 117a of the compression receiver plate 115a or flowing aside the compression receiver plate 115a to be stored in the water tank 107a.

When the insert levers 106a, 106a of the mop with sponge 101 a are pulled out of the insert rings 114a, 114a, the compression presser plate 110a is lifted to rotate in the direction of arrow B in Fig. 4 by the spring force of the springs 116a, 116a.

It is to be noted that, while the insert levers 106a, 106a are provided on the mop with sponge 101a side and the insert tubes 114a, 114a on the compression presser plate 110a side in the present example, the insert lever may be provided reversely on the compression presser plate 110a side and the insert tube on the mop with sponge 101a side

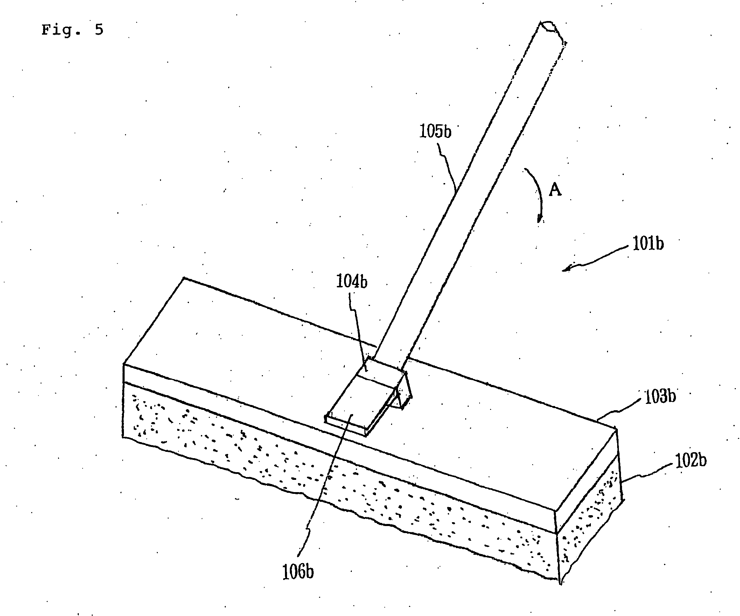

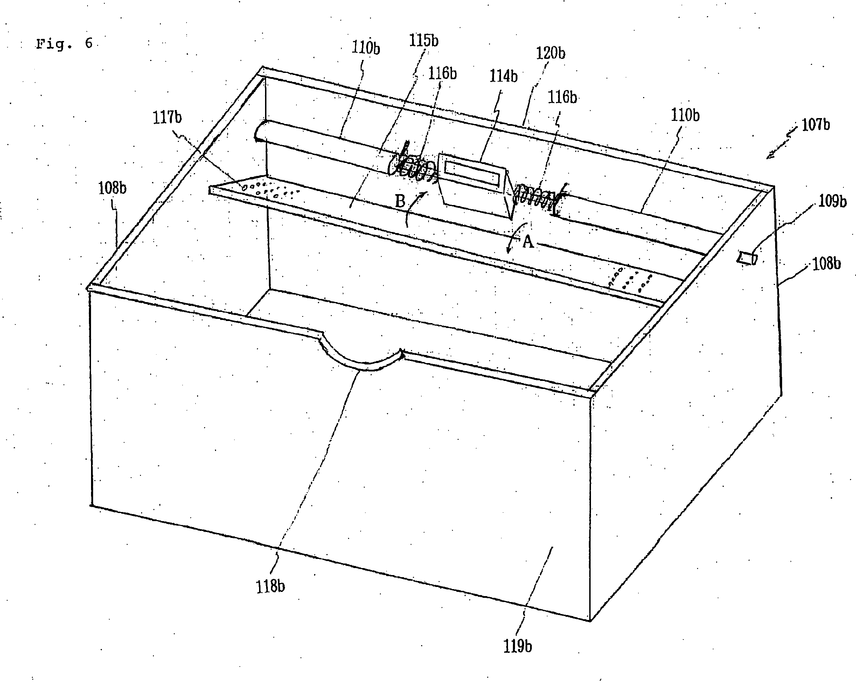

Figs. 5 and 6 illustrate a third example . In Fig. 5, numeral 101b designates a mop with sponge, numeral 102b designates a sponge mop pad, numeral 103b designates a metal plate that fixedly holds the sponge mop pad 102b. numeral 104b designates a fixing lever that fixes a mop handle 105b to the metal plate 103b. Numeral 106b designates an insert lever that is provided fixedly to the fixing lever 104b so as to project therefrom. While one piece of the insert lever 106b is provided in Fig. 5, a plurality thereof may be provided to the fixing lever 104b.

In Fig. 6, numeral 107b designates a box-like water tank that has its upper surface opened and stores therein wash water (not shown). Numeral 108b designates a side plate of the water tank 107b. The side plates 108b, 108b have holes bored in upper side end portions of the side plates 108b, 108b in which a rotating shaft 109b is rotatably supported. Numeral 110b, 110b designate rod members that are provided fixedly to and concentrically with the rotating shaft 109b. An insert hollow member 114b is fixedly provided to the rotating shaft 109b at a central position thereof. In Fig. 6, while one piece of the insert hollow member 114b is provided, a plurality thereof may be provided to the rotating shaft 109b. Numeral 115b designates a compression receiver plate that is inclinedly provided at an upper middle position in the water tank 107b. Here, the minimum gap between a lower surface of the metal plate 103b and an upper surface of the compression receiver plate 115b is set to such a size as realizes an appropriate thickness of the sponge mop pad 102b by the compression. Numerals 116b, 116b designate springs that are provided between end faces of the rod members 110b, 110b and side faces of the insert hollow member 114b. The springs 116b, 116b have their one ends fixed to the side faces of the insert hollow member 114b and the other ends fixed to a rear plate 120b of the water tank 107b. The springs 116b, 116b in their natural state act on the insert hollow member 114b so that the insert hollow member 114b on its one side is lifted to be kept apart from the compression receiver plate 115b in that state. Numeral 117b designates a plurality of drain holes bored in the compression receiver plate 115b. Instead of the drain holes, a plurality of drain grooves may be provided. Numeral 118b designates a cut portion, on which the mop handle 105b abuts, provided in an upper peripheral central portion of a front plate 119b of the water tank 107b.

In the third example constructed as mentioned above, the sponge mop pad 102b of the mop with sponge 101b is immersed into the wash water in the water tank 107b and the sticking dust and dirt of the sponge mop pad 102b are washed off. Then, the insert lever 106b of the mop with sponge 101b is inserted into the insert hollow member 114b of the water tank 107b and the mop handle 105b is rotated in the direction of arrow A in Figs. 5 and 6 against the spring force of the springs 116b, 116b. Thereby, the sponge mop pad 102b is pinched to be compressed between the metal plate 103 and the compression receiver plate 115b, so that the sponge mop pad 102b is squeezed to realize a desired water content thereof appropriate for the wiping. The squeezed water falls down flowing through the plurality of drain holes 117b of the compression receiver plate 115b or flowing aside the compression receiver plate 115b to be stored in the water tank 107b.

When the insert lever 106b of the mop with sponge 101b is pulled out of the insert hollow member 114b, the insert hollow member 114b is lifted to rotate in the direction of arrow B in Fig. 6 by the spring force of the springs 116b, 116b.

It is to be noted that, while the insert lever 106b is provided on the mop with sponge 101b side and the insert hollow member 114b on the water tank 107b side in the present embodiment, the insert lever may be provided reversely on the water tank 107b side and the insert hollow member on the mop with sponge 101b side.

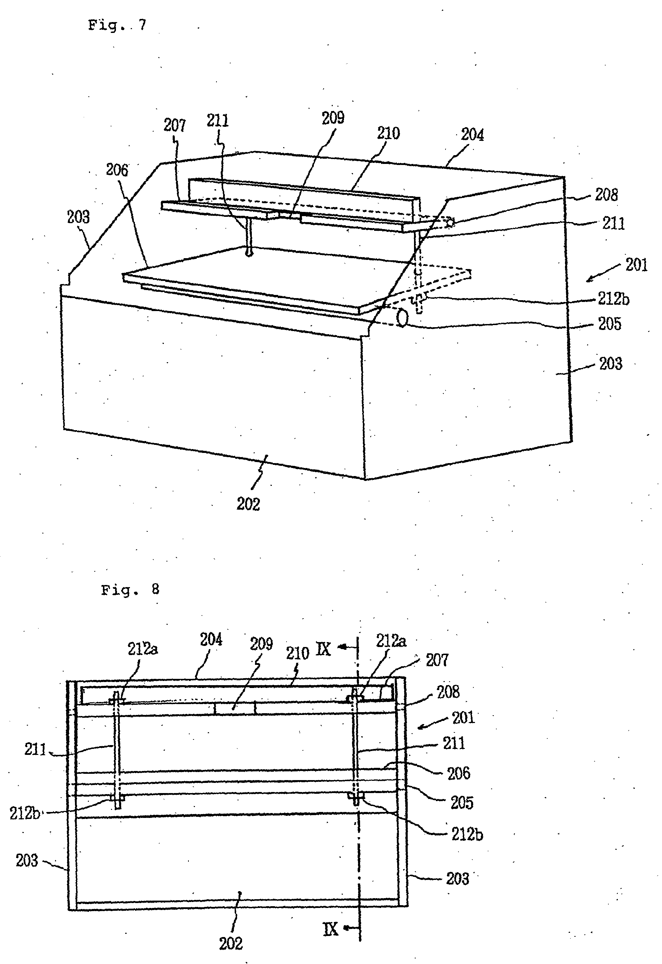

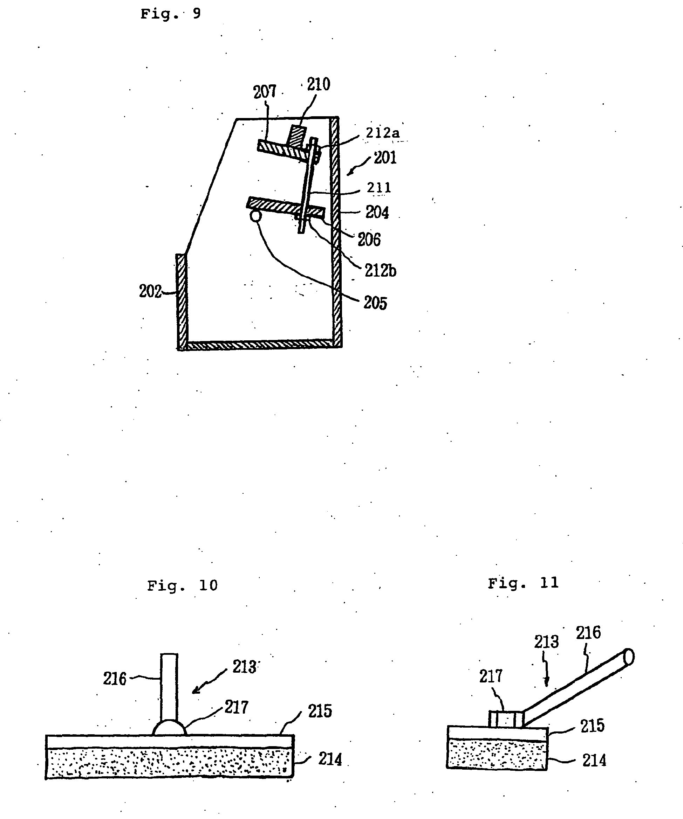

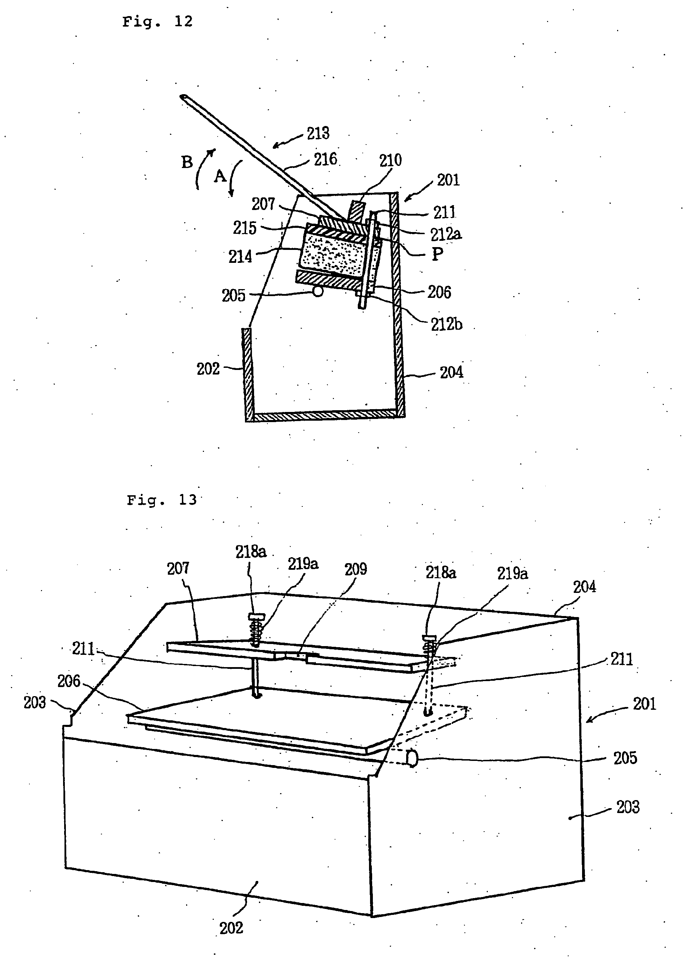

Next, Figs. 7 to 16 illustrate a fourth and a fifth example . Figs. 7 to 12 show the fourth example, wherein Fig. 7 is a perspective view, Fig. 8 is a front view, Fig. 9 is a cross sectional side view taken on line IX-IX of Fig. 8 and seen in the direction of arrows, Fig. 10 is a front view of a mop with sponge of the fourth example, Fig. 11 is a side view of the mop of Fig. 10 and Fig. 12 is a function explanatory view of the fourth example.

In Figs. 7 to 9, numeral 201 designates a box-like water tank that has its upper surface opened and stores therein wash water (not shown). Numeral 202 designates a front plate of the water tank 201, numerals 203, 203 designate side plates of the water tank 201 and numeral 204 designates a rear plate of the water tank 201. Numeral 205 designates a cylindrical member that is provided between the side plates 203, 203. This cylindrical member 205 may be provided either fixedly or rotatably. Numeral 206 designates a receiver plate that is placed on the cylindrical member 205, and numeral 207 designates a presser plate that is provided between the side plates 203, 203 with an appropriate gap kept above the receiver plate 206. Numeral 208 designates a shaft that is provided projecting from both side end faces of the presser plate 207 to be rotatably supported to the side plates 203, 203. Numeral 209 designates a cut portion that is provided at a front peripheral central position of the presser plate 207. Numeral 210 designates a reinforcing plate that is fixed to an upper surface of the presser plate 207. Numerals 211, 211 designate struts that support the presser plate 207 and the receiver plate 206. Numerals 212a, 212b designate an upper nut and a lower nut, respectively, that adjustably form a length of the strut 211 between the presser plate 207 and the receiver plate 206. The length of the struts 211, 211 between a lower surface of the presser plate 207 and an upper surface of the receiver plate 206 is adjusted by the position of the upper nut 212a or the lower nut 212b so as to be appropriately smaller than a thickness of a sponge mop pad 214 and a metal plate 215 fixedly supporting the sponge mop pad 214, as shown in Figs. 10 and 11. That is, the minimum gap between the lower surface of the presser plate 207 and the upper surface of the receiver plate 206 is set to such a size as realizes an appropriate thickness of the sponge mop pad 214 by the compression. In Figs. 10 and 11, numeral 217 designates a fixing lever that fixes a mop handle 216 to the metal plate 215.

In the fourth example constructed as mentioned above, the length of the strut 211 between the presser plate 207 and the receiver plate 206 is first adjusted beforehand by the position of the upper nut 212a or the lower nut 212b so as to be slightly smaller than the thickness of the sponge mop pad 214 and the metal plate 215. The sponge mop pad 214 of the mop with sponge 213 is immersed into the wash water in the water tank 201 and the sticking dust and dirt of the sponge mop pad 214 are washed off. Then, as shown in Fig. 12, the sponge mop pad 214 together with the metal plate 215 of the mop with sponge 213 is inserted into the gap between the presser plate 207 and the receiver plate 206 and subsequently the mop handle 216 is rotated in the direction of arrow A in Fig. 12. Thus, the metal plate 215 is rotated in the direction of arrow A around a fulcrum line P in Fig. 12. This fulcrum line P is generated in a contact face between a front end portion of the metal plate 215 and a rear end portion of the presser plate 207. Thereby, the sponge mop pad 214 is compressed between the metal plate 215 and the receiver plate 206 so that the water contained in the sponge mop pad 214 is squeezed off to be appropriately adjusted for wiping the floor. The squeezed water falls down flowing through a plurality of drain holes (not shown) bored in the receiver plate 206 or flowing aside the receiver plate 206 to be stored in the water tank 201.

Then, the mop handle 216 is rotated in the direction of arrow B in Fig. 12 and the sponge mop pad 214 together with the metal plate 215 is pulled out of the gap between the presser plate 207 and the receiver plate 206, so that the mop with sponge is ready for the next wiping and cleaning.

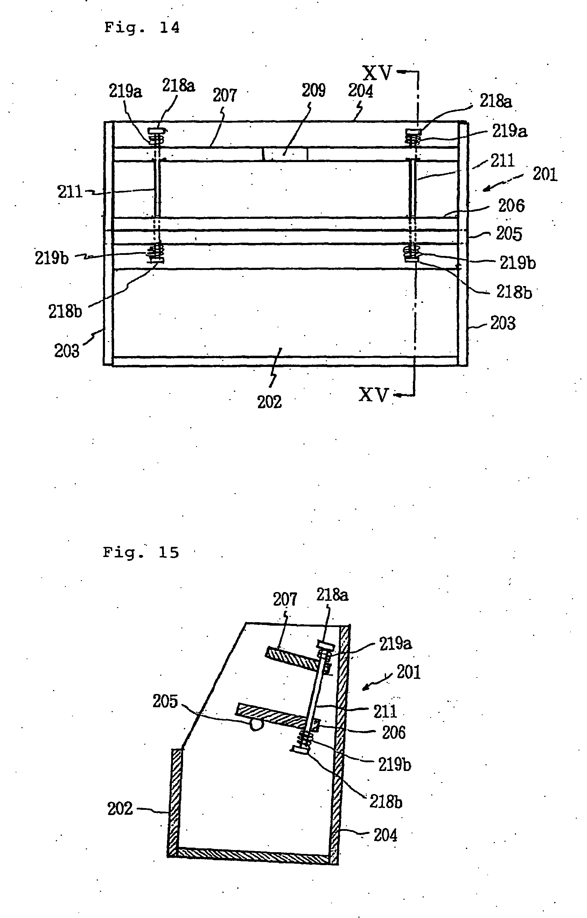

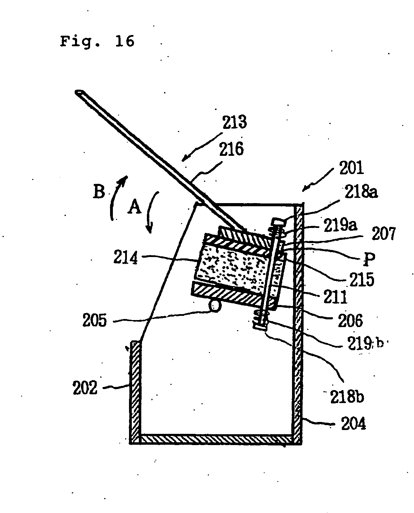

Figs. 13 to 16 show the fifth example, wherein Fig. 13 is a perspective view, Fig. 14 is a front view, Fig. 15 is a cross sectional side view taken on line XV-XV of Fig. 14 and seen in the direction of arrows and Fig. 16 is a function explanatory view of the fifth example. As the reference numerals 201 to 207, 209 and 211 to 215 in Figs. 13 to 16 designate the same parts and components, respectively, as those shown in Figs. 7 to 12, repeated description thereon will be omitted.

In Figs. 13 to 16, numeral 218a designates an upper swell that is provided at an upper end of the strut 211 passing through the presser plate 207 and numeral 218b designates a lower swell that is provided at a lower end of the strut 211 passing through the receiver plate 206. Numeral 219a designates an upper spring that is provided between the upper swell 218a and an upper surface of the presser plate 207 and numeral 219b designates a lower spring that is provided between the lower swell 218b and a lower surface of the receiver plate 206. If the strut 211 is separated into two parts at a middle position thereof, then a single spring may be provided between these two parts.

In the fifth example constructed as mentioned above, the sponge mop pad 214 of the mop with sponge 213 is immersed into wash water (not shown) in the water tank 201 and the sticking dust and dirt of the sponge mop pad 214 are washed off. Then, as shown in Fig. 16, the sponge mop pad 214 together with the metal plate 215 of the mop with sponge 213 is inserted into the gap between the presser plate 207 and the receiver plate 206 and subsequently the mop handle 216 is rotated in the direction of arrow A in Fig. 16 against the spring force of the upper springs 219a, 219a and the lower springs 219b, 219b. Thus, the metal plate 215 is rotated in the direction of arrow A around a fulcrum line P in Fig. 16. This fulcrum line P is generated in a contact face between a front end portion of the metal plate 215 and a rear end portion of the presser plate 207. Thereby, the sponge mop pad 214 is compressed between the metal plate 215 and the receiver plate 206 so that the water contained in the sponge mop pad 214 is squeezed off to be appropriately adjusted for wiping the floor. The squeezed water falls down flowing through a plurality of drain holes (not shown) bored in the receiver plate 206 or flowing aside the receiver plate 206 to be stored in the water tank 201.

Then, the mop with sponge 213 is pulled out of the gap between the presser plate 207 and the receiver plate 206 and the presser plate 207 is rotated in the direction of arrow B in Fig. 16 by the spring force of the upper springs 219a, 219a and the lower springs 219b, 219b.

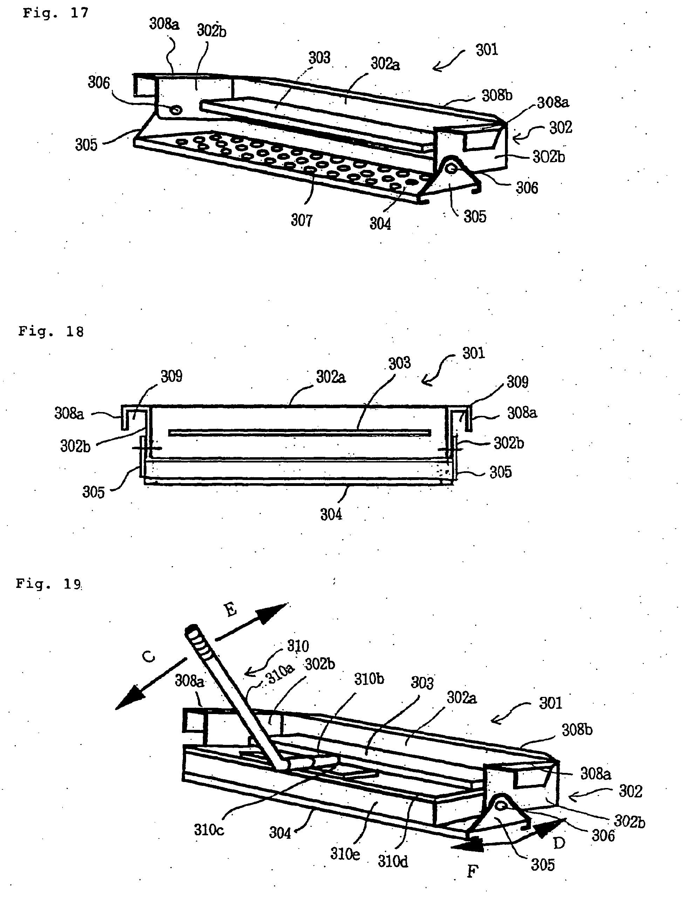

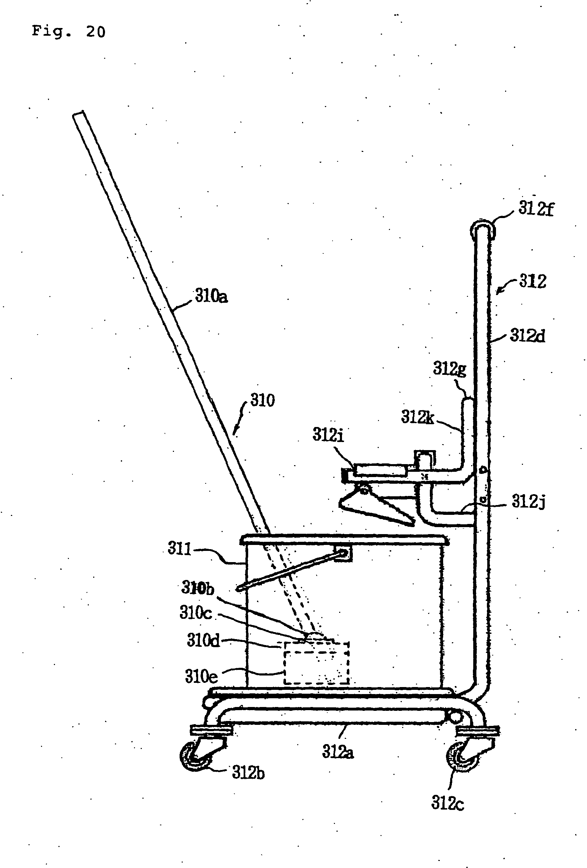

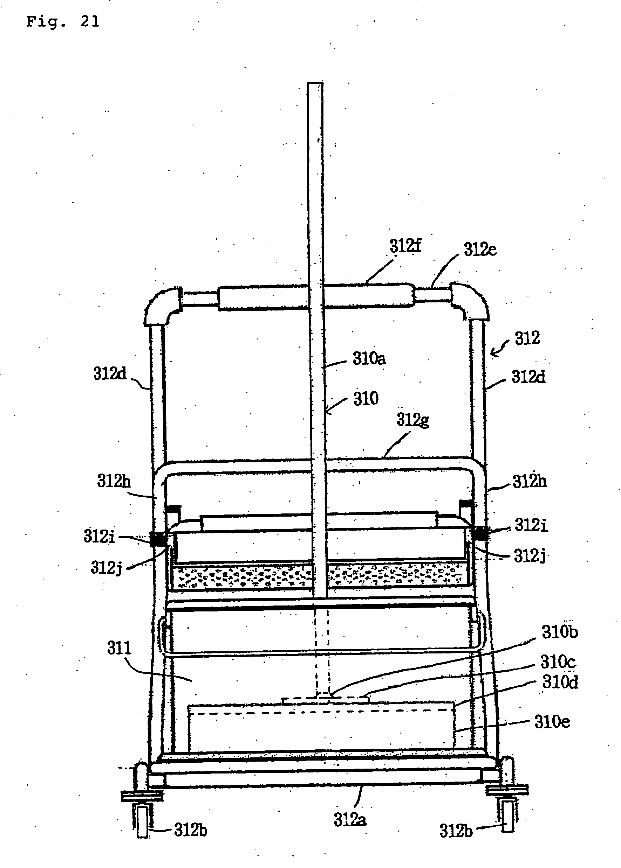

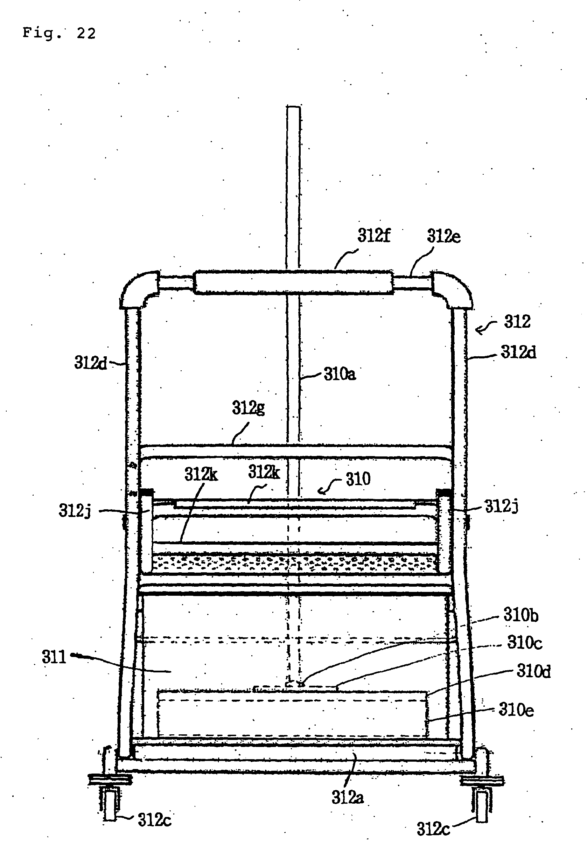

Figs. 17 to 22 illustrate a sixth example, wherein Fig. 17 is a perspective view of a mop squeezer of the sixth example, Fig. 18 is a front view of the mop squeezer, Fig. 19 is a function explanatory view of the mop squeezer in which a mop with sponge is inserted into the mop squeezer to thereby squeeze wash water or dirty water contained in a sponge mop pad, Fig. 20 is a side view showing the state where the mop squeezer is mounted on a strut, Fig. 21 is a front view of the mop squeezer of Fig. 20 and Fig. 22 is a rear view of the mop squeezer of Fig. 20.

In Figs. 17 to 22, numeral 301 designates the mop squeezer, numeral 302 designates a frame of a cross sectional C-shape of the mop squeezer that has its upper and lower surface portions opened and comprises a rear plate 302a and side plates 302b, 302b. Numeral 303 designates a presser plate that is fixed between the side plates 302b, 302b. It is to be noted that the presser plate 303 may have its both side ends fixed to the side plates 302b, 302b or may have its both side ends not fixed to the side plates 302b, 302b but fixed to the rear plate 302a of the frame 302, as shown in Fig. 18. Numeral 304 designates a receiver plate that has its both side ends fitted with frame suspending plates 305, 305 of a substantially triangular shape so as to be rotatable around pins 306, 306. Numeral 307 designates a plurality of holes that are bored in the receiver plate 304. Numerals 308a, 308a designate frame suspending formed members that extend from the side plates 302b, 302b of the frame 302 and form grooves 309, 309. Numeral 308b designates a frame suspending formed member that extends from the rear plate 302a of the frame 302 and forms a groove (not shown). As for the frame suspending formed members 308a, 308a and that 308b, both of them may be provided or either of them may be provided. A mop with sponge 310 is such one as shown in Fig. 19, wherein numeral 310a designates a handle and numeral 310b designates a fixing lever that fixes a fixing plate 310c to the handle 310a. Numeral 310d designates a metal plate, to which a sponge mop pad 310e is bonded via a double coated adhesive tape, etc.

A water tank 311 is placed on a bottom plate 312a of a carriage 312, as shown in Figs. 20 to 22. The carriage 312 comprises four casters, that is, two 312b, 312b on the front side and two 312c, 312c on the rear side. The carriage 312 is fixed with two upwardly extending struts 312d, 312d that have their upper ends connected to each other via an upper strut 312e. The upper strut 312e, at which the workers push the carriage 312, is covered with a rubber tube 312f, etc. so as to be friendly to the workers. Numeral 312g designates a middle strut that is fixed to a middle position of the struts 312d, 312d and has its both ends extending downward to form vertical struts 312h, 312h. The vertical struts 312h, 312h have their ends bent substantially orthogonally to further extend to form suspending struts 312i, 312i. Between the suspending struts 312i, 312i and the struts 312d, 312d, L-shaped reinforcing struts 312j, 312j are provided as reinforcing members. Also, between the reinforcing struts 312j, 312j, upper and lower horizontal reinforcing struts 312k, 312k are provided.

In the sixth example constructed as mentioned above, the sponge mop pad 310e of the mop with sponge 310 is immersed into wash water (not shown) in the water tank 311, as shown in Figs. 20 to 22, and the sticking dust and dirt of the sponge mop pad 310e are washed off. Then, as shown in Fig. 19, the sponge mop pad 310e together with the metal plate 310d of the mop with sponge 310 is inserted into the gap between the presser plate 303 and the receiver plate 304 and subsequently the mop handle 310a is rotated in the direction of arrow C in Fig. 19. Thus, the receiver plate 304 is rotated in the direction of arrow D around the pins 306, 306 via the frame suspending plates 305, 305. Thereby, the gap between the presser plate 303 and the receiver plate 304 becomes narrower so that the sponge mop pad 310e is compressed and the water contained in the sponge mop pad 310e is squeezed off to be appropriately adjusted for wiping the floor. The squeezed water falls down flowing through a plurality of holes 307 bored in the receiver plate 304 or flowing aside the receiver plate 304 to be stored in the water tank 311.

Then, the handle 310a is rotated in the direction of arrow E in Fig. 19 to thereby rotate the receiver plate 304 in the direction of arrow F around the pins 306, 306 via the frame suspending plates 305, 305. Thereby, the gap between the presser plate 303 and the receiver plate 304 becomes larger so that the mop with sponge 310 can be easily pulled out. Thus, the mop with sponge 310 is removed out of the mop squeezer 301 to be ready for the next wiping.

In this case, a considerable force is required to move the handle 310a in the direction of arrow C in Fig. 19 for squeezing the wash water contained in the sponge mop pad 310e.

In the conventional case, it has been necessary to design the water tank so that it has an enough strength for standing a strong force added to the handle 310a. In the present example, however, the strong force added to the handle 310a is conveyed to the entire carriage 312 via the suspending struts 312i, 312i. Thus, it is not necessary to make the water tank 311 strengthened so as to stand the strong force added to the handle 310a.

The present example is not limited to the examples illustrated in Figs. 17 to 22 but can be applied to general mop squeezers having such mops as made by cloths or cloth fibers, as exemplified next.

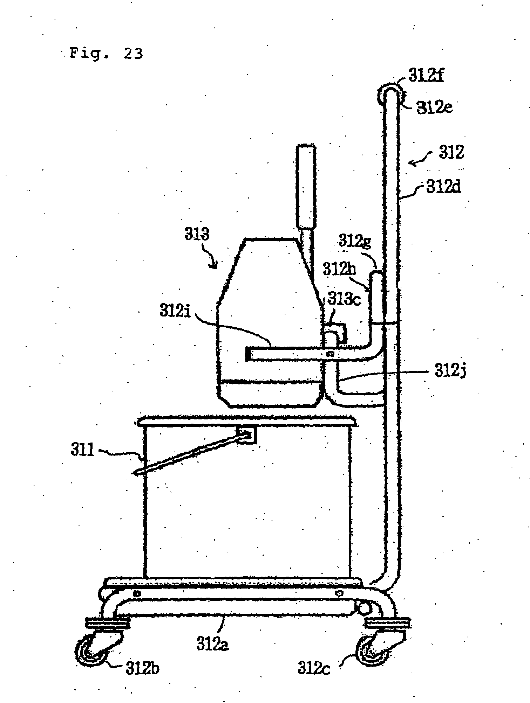

A seventh example, that is similar to the sixth example, will be described with reference to Figs. 23 to 25.

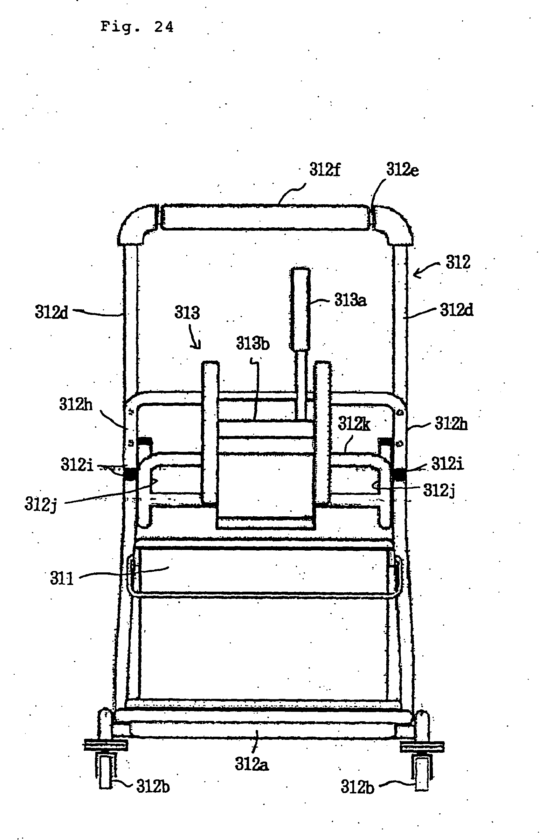

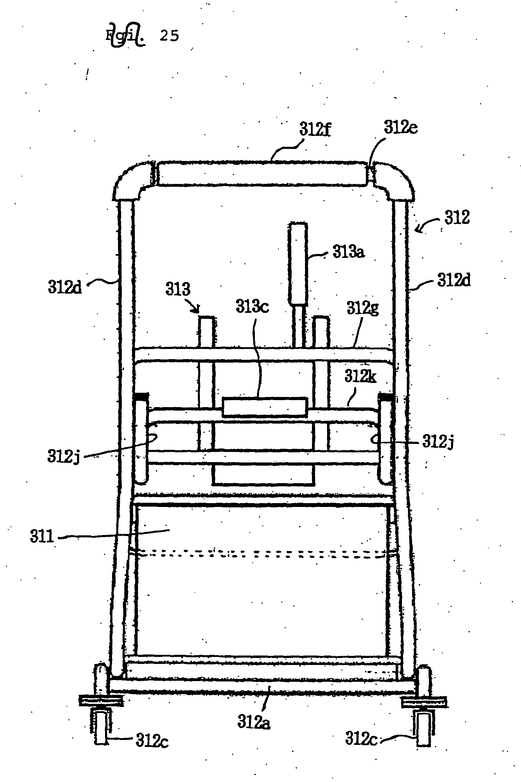

Fig. 23 is a side view, Fig. 24 is a front view and Fig. 25 is a rear view, all of the seventh example. As the reference numerals 311, 312, 312a, 312b, 312c, 312d, 312e, 312f, 312g, 312h, 312i, 312j and 312k in Figs. 23 to 25 designate the same parts and components, respectively, as those shown in Figs. 20 to 22, repeated description thereon will be omitted.

In Figs. 23 to 25, numeral 313 designates a cloths or cloth fiber type mop squeezer, wherein numeral 313a designates a handle, numeral 313b designates a squeezing shaft of a mop made by cloths or cloth fibers (not shown). The squeezing shaft 313b is rotated by the rotation of the handle 313a to thereby squeeze off wash water contained in the cloths or cloth fibers. Numeral 313c designates a suspending formed member that is fixed to the squeezer 313.

In the seventh example constructed as mentioned above, a strong force added to the handle 313a for squeezing off the water contained in the cloths or cloth fiber type mop is conveyed to the entire carriage 312 via the suspending formed member 313c and the suspending struts 312i, 312i. Hence, it is not necessary to make the water tank 311 strengthened so as to stand the strong force added to the handle 313a.

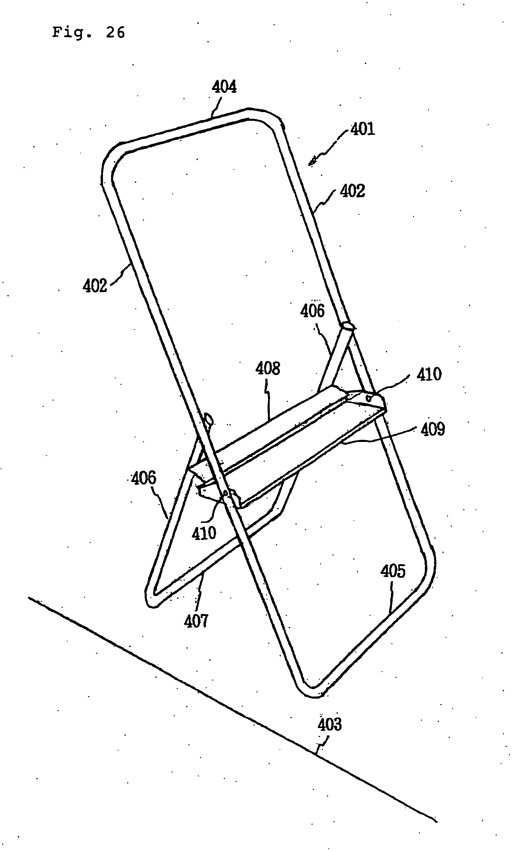

A mop squeezer of an eighth example will be described with reference to Figs. 26 to 28.

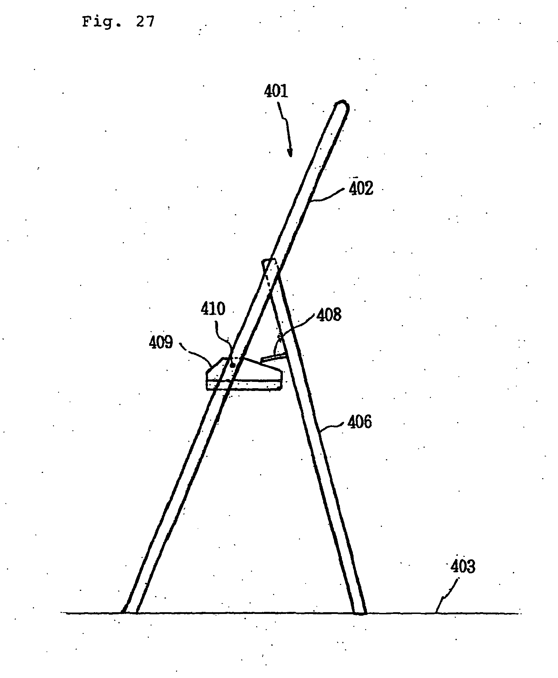

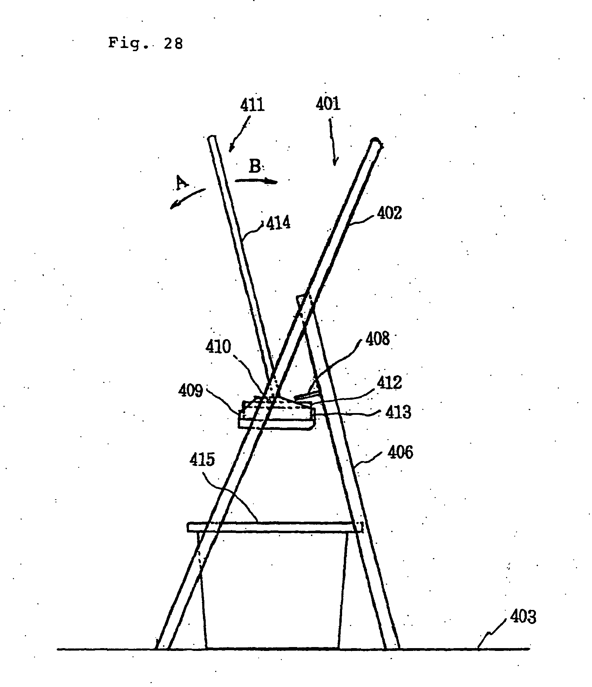

Fig. 26 is a perspective view, Fig. 27 is a side view and Fig. 28 is a function explanatory view, all of the eighth example.

In Figs. 26 to 28, numeral 401 designates the mop squeezer, numerals 402, 402 designate frame members that are provided substantially in parallel to each other and inclinedly relative to a floor 403, numeral 404 designates an upper frame pipe that connects upper ends of the frame members 402, 402 to each other and numeral 405 designates a lower frame pipe that connects lower ends of the frame members 402, 402 to each other. Numerals 406, 406 designate struts that are fixedly provided at a middle position of the frame members 402, 402 so as to make an acute angle between themselves and the frame members 402, 402 and numeral 407 designates a lower frame pipe that connects lower ends of the struts 406, 406 to each other. Numeral 408 designates a presser plate that is fixed to the struts 406, 406 and numeral 409 designates a receiver plate that is fitted to the frame members 402, 402 rotatably around pins 410, 410. The gap between the presser plate 408 and the receiver plate 409 is set to such a size as is slightly smaller than a thickness of the mop with sponge in the prior art shown in Figs. 35 and 36. In Fig. 28, numeral 411 designates a mop with sponge that comprises a metal plate 412, a sponge mop pad 413 and a handle 414. Numeral 415 designates a water tank.

In the eighth example constructed as mentioned above, sponge mop pad 413 together with the metal plate 412 of the mop with sponge 411 is placed on the receiver plate 409 so as to be inserted into the gap between the presser plate 408 and the receiver plate 409. When the handle 414 is rotated in the direction of arrow A in Fig. 28, the receiver plate 409 is also rotated so that the sponge mop pad 413 is compressed between the presser plate 408 and the receiver plate 409. Thus, the water contained in the sponge mop pad 413 is squeezed off to be appropriately adjusted. Then, the handle 414 is rotated in the direction of arrow B and the sponge mop pad 413 together with the metal plate 412 is taken out from between the presser plate 408 and the receiver plate 409 to be ready for the next wiping.

In this case, a considerable force is required to move the handle 414 in the direction of arrow C in Fig. 28 for squeezing the wash water contained in the sponge mop pad 413.

In the conventional case, it has been necessary to design the water tank so that it has an enough strength for standing a strong force added to the handle 414. In the present example, however, the strong force added to the handle 414 is conveyed to the strut 406 via the presser plate 408 and to the frame member 402 via the receiver plate 409, and thus to the entire mop squeezer 401. Hence, it is not necessary to make the water tank 415 strengthened so as to stand the strong force added to the handle 414.

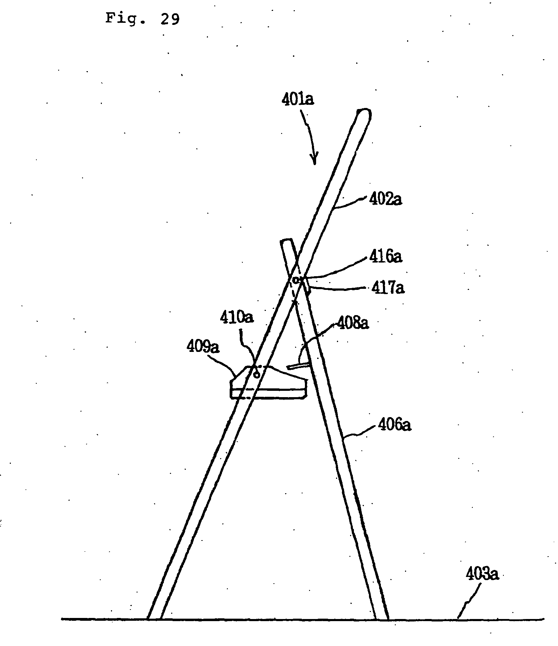

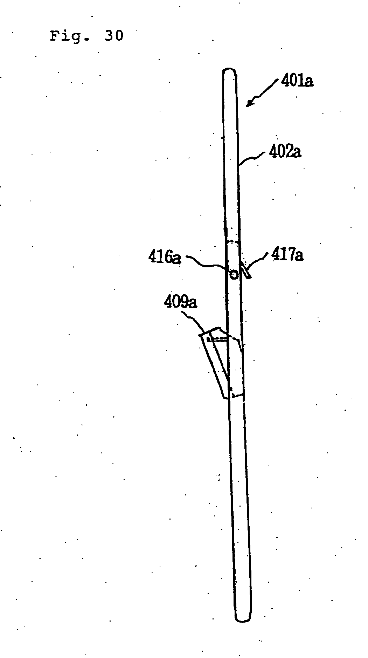

Next, a mop squeezer of a ninth example will be described with reference to Figs. 29 and 30. Both of Figs. 29 and 30 are side views of the ninth example, wherein Fig. 30 shows the state where the mop squeezer is folded.

In Figs. 29 and 30, reference numerals 401a to 403a, 406a and 408a to 410a designate the same parts and components, respectively, as those shown by reference numerals 401 to 403, 406 and 408 to 410 in Figs. 26 to 28 and repeated description thereon will be omitted.

In Figs. 29 and 30, numeral 416a designates a pin, around which the frame member 402a and the strut 406a are rotatably supported and numeral 417a designates a stopper that stops the strut 406a against the frame member 402a so that an acute angle is formed between the frame member 402a and the strut 406a.

In the ninth example constructed as mentioned above, during the work, the mop squeezer is used while the frame member 402a and the strut 406a keep the acute angle, as shown in Fig. 29. When the work is finished or otherwise during the time out of work, the strut 406a is folded to the frame member 402a, as shown in Fig. 30, so that the mop squeezer is easily transported or is kept aside.

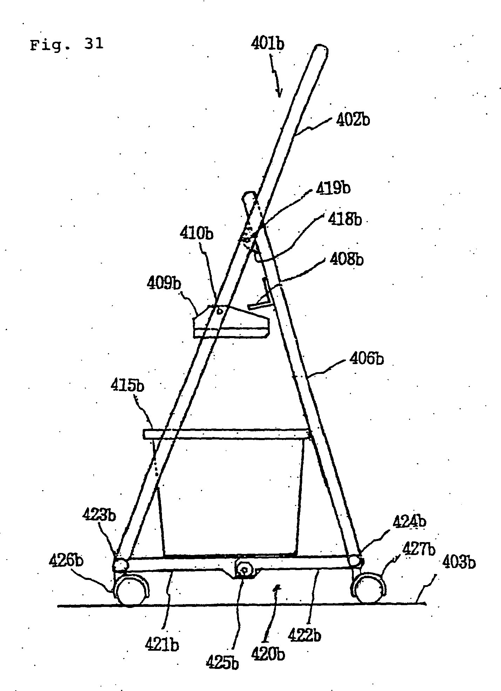

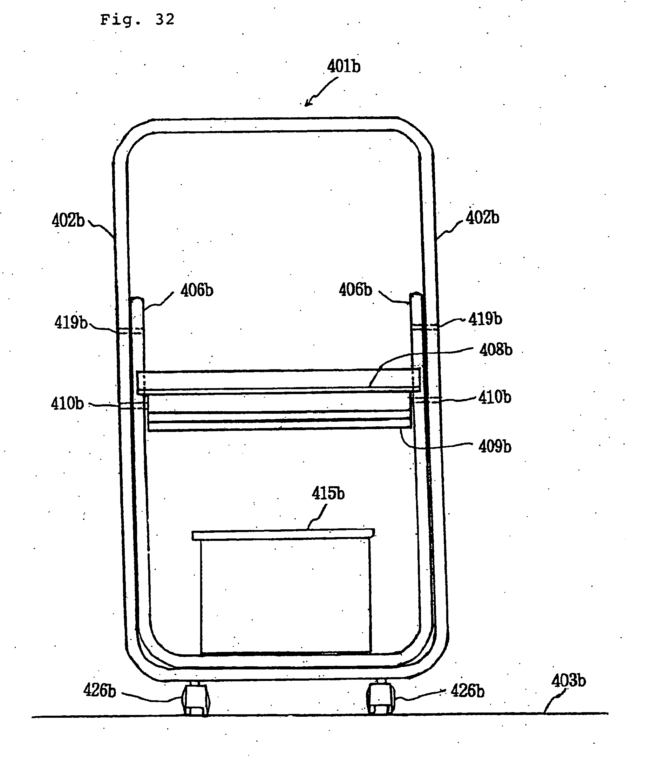

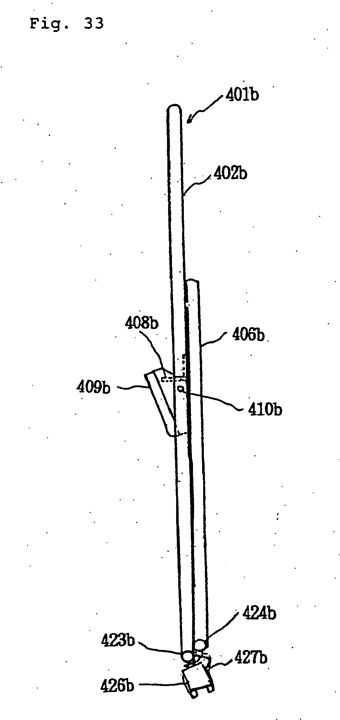

Further, a mop squeezer of a tenth example will be described with reference to Figs. 31 to 33. Fig. 31 is a side view thereof, Fig. 32 is a front view thereof and Fig. 33 is a side view showing the state where the mop squeezer is folded.

In Figs. 31 to 33, reference numerals 401b to 403b, 406b, 409b, 410b and 415b designate the same parts and components, respectively, as those shown by reference numerals 401 to 403, 406, 409, 410 and 415 in Figs. 26 to 28 and repeated description thereon will be omitted.

In Figs. 31 to 33, numeral 418b designates a rotation jig, by which the frame member 402b and the strut 406b are rotatably supported, numeral 419b designates a pin and numeral 420b designates a bottom portion of the mop squeezer 401b that exists between a lower end portion of the frame member 402b and a lower end portion of the strut 406b. This bottom portion 420b is surrounded by a hinge mechanism that comprises a frame member side bottom plate 421b, a strut side bottom plate 422b, a pin 423b rotatably connecting the frame member 402b to the frame member side bottom plate 421b, a pin 424b rotatably connecting the strut 406b to the strut side bottom plate 422b and a pin 425b rotatably connecting the frame member side bottom plate 421b and the strut side bottom plate 422b to each other. Numerals 426b, 427b designate casters fitted to the lower ends of the frame member 402b and the strut 406b.

In the tenth example constructed as mentioned above, during the work, the mop squeezer is used while the frame member 402b and the strut 406b keep the acute angle, as shown in Fig. 31.

When the work is finished at a predetermined place, the mop squeezer is moved to a next place to be wiped using the casters 426b, 427b. When the work is finished or otherwise during the time out of work, the strut 406b is folded to the frame member 402b, as shown in Fig. 33, so that the mop squeezer is easily transported or is kept aside.

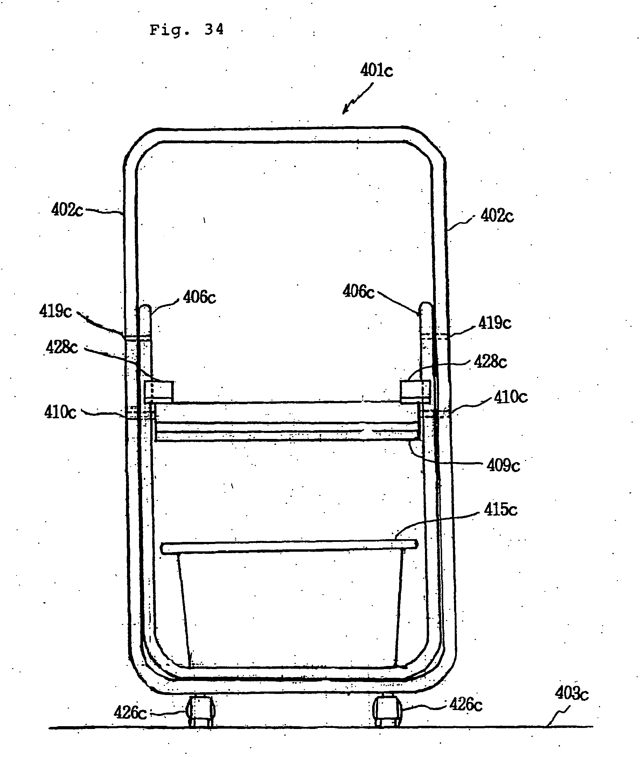

Finally, a mop squeezer of an embodiment according to the present invention will be described with reference to Fig. 34. Fig. 34 is a front view of the embodiment.

In Fig. 34, reference numerals 401c to 403c, 406c, 409c, 410c, 415c, 419c and 426c designate the same parts and components, respectively, as those shown by reference numerals 401b to 403b, 406b, 409b, 410b, 415b, 419b and 426b in Fig. 33 and repeated description thereon will be omitted.

In Fig. 34, numerals 428c, 428c designate presser plate pieces that are fitted to the struts 406c, 406c.

In the embodiment constructed as mentioned above, if a sponge mop pad having an extended width is used, a metal plate of the extended width holding the sponge mop pad is engaged at both end portions of the metal plate with the presser plate pieces 428c, 428c. Thus, the sponge mop pad is compressed between the metal plate and the receiver plate 409c and water contained in the sponge mop pad is squeezed off so that a predetermined water content is realized.

### INDUSTRIAL APPLICABILITY

As mentioned above, the mop and the mop squeezer of the present invention has the applicability as follows:
1. As the water contained in the sponge mop pad after washed by the wash water can be easily squeezed off by application of the lever using the handle of the mop, the cleaning work can be done comfortably even by women workers having less physical power.
2. As the sponge mop pad is not of the type that is folded at the middle position so as to squeeze off the water contained therein, deterioration of the sponge mop pad can be avoided.
3. As the water contained in the sponge mop pad is squeezed off by the homogenous force added to the entire surface of the sponge mop pad, the water content in the sponge mop pad after squeezed becomes homogenous over the entire sponge mop pad and no irregularity in the wiping is caused.
4. As the structure of the mop and/or the mop squeezer is simple, it can be easily changed to a larger size or to a smaller size so as to be widely applied not only to the industrial field but also to the home use.
5. While the conventional cleaning in a hospital etc. has been done in three steps, that is, sweeping by a bloom, wiping by a dust mop and wiping by water, the mop and/or the mop squeezer of the present invention enable the cleaning by one step, thereby remarkably reducing the cost of man power required for the cleaning.
6. As the cleaning, especially in a hospital, can be done by the sponge mop pad having the homogenous water content, the water on the floor after the cleaning is dried in a short time, which is effective for avoidance of internal infection in the hospital.
7. As the sponge mop pad is squeezed directly above the water tank, there is caused no scattering of the water that is squeezed off, which is preferable for the sanitary purpose.
8. As the squeezing mechanism is made very simple such that the sponge mop pad is compressed by the metal plate of the mop that is rotated around the fulcrum defined as the contact line of the metal plate and the presser plate of the water tank, the squeezing work of the mop is very simple.
9. While the conventional water tank has been designed to have a high strength so as to stand the large force required for squeezing off the wash water contained in the mop, this is not necessary in the present invention.
10. For the same reason as in Item 9. above, the water tank can be made having a light weight.
11. As the squeezing mechanism of the sponge mop pad is very simple, manufacture of the mop squeezer is very easy.
12. As the structure of the unit is simple as compared with the conventional unit, the mop squeezer of the sponge mop pad can be made less costly.
13. As the hinge mechanism enables a compact size of the mop squeezer, when folded, transportation and maintenance thereof can be done easily.

## Claims

1. A mop squeezer (401c) for squeezing water from a sponge mop pad (413) of a mop (411), said mop squeezer (401c) comprising:
two frame members (402c);
a strut (406c) fitted to each of said frame members (402c) such that, when the mop squeezer (401c) is used during the work, an acute angle is formed between said respective strut (406c) and said respective frame member (402c);
a presser piece (428c) fixed to each of said struts (406c); and
a receiver plate (409c) rotatably arranged between said frame members (402c) below said presser pieces (428c) so that a gap between said presser pieces (428c) and said receiver plate (409c) is smaller than a thickness of the sponge mop pad (413) that is to be applied to said mop squeezer (401c).

2. The mop squeezer (401c) as claimed in claim 1, wherein said struts (406c) are rotatably fitted to said frame members (402c) such that, for a stationary position of said mop squeezer (401c) during the time out of work, said struts (406c) can be folded to said frame members (402c) so that the angle formed between said respective strut (406c) and said respective frame member (402c) is substantially zero.

3. The mop squeezer (401c) as claimed in claim 1 or 2, wherein said frame members (402c) have their lower end portions connected to each other via a lower frame fixing member, said struts (406c) have their lower end portions connected to each other via a lower strut fixing member and said frame members (402c) and said struts (406c) are connected to each other via a hinge mechanism.

4. The mop squeezer (401c) as claimed in claim 1, 2 or 3, wherein said presser pieces (428c) are formed as presser plate pieces (428c).

5. A mop and mop squeezer, comprising
a mop squeezer (401c) as defined in any one of claims 1 to 4; and
a mop (411) having a sponge mop pad (413) of an extended width including a metal plate of the extended width holding the sponge mop pad (413), wherein the metal plate can be engaged at both of its end portions with the presser pieces (428c) of the mop squeezer (401c) so that the sponge mop pad (413) can be compressed between the metal plate and the receiver plate (409c).

## Patentansprüche

1. Eine Mopp-Auswringvorrichtung (401c) zum Auswringen von Wasser aus einem Schwamm-Moppbelag (413) eines Mopps (411), wobei die Mopp-Auswringvorrichtung (401c) aufweist:
zwei Rahmenelemente (402c),
eine Strebe (406c), die mit jedem der Rahmenelemente (402c) so verbunden ist, dass, wenn die Mopp-Auswringvorrichtung (401c) während der Arbeit verwendet wird, ein spitzer Winkel zwischen der jeweiligen Strebe (406c) und dem jeweiligen Rahmenelement (402c) gebildet ist,
ein Druckstück (428c), das an jede der Streben (406c) befestigt ist, und
eine Aufnahmeplatte (409c), die drehbar zwischen den Rahmenelementen (402c) unter den Druckstücken (428c) so angeordnet ist, dass ein Zwischenraum zwischen den Druckstücken (328c) und der Aufnahmeplatte (409c) kleiner ist als eine Dicke des Schwamm-Moppbelags (413), der bei der Mopp-Auswringvorrichtung (401c) anzuwenden ist.

2. Die Mopp-Auswringvorrichtung (401c) gemäß Anspruch 1, wobei die Streben (406c) drehbar mit den Rahmenelementen (402c) so verbunden sind, dass, bei einer stationären Position der Mopp-Auswringvorrichtung (401c) während der Zeit, in der die Vorrichtung nicht in Arbeit ist, die Streben (406c) zu den Rahmenelementen (402c) so gefaltet werden können, dass der zwischen der jeweiligen Strebe (406c) und dem jeweiligen Rahmenelement (402c) gebildete Winkel im wesentlichen Null beträgt.

3. Die Mopp-Auswringvorrichtung (401c) gemäß Anspruch 1 oder 2, wobei die unteren Endabschnitte der Rahmenelemente (402c) über ein unteres Rahmen-Befestigungselement miteinander verbunden sind, wobei die unteren Endabschnitte der Streben (406c) über ein unteres Streben-Befestigungselement miteinander verbunden sind, und die Rahmenelemente (402c) und die Streben (406c) über einen Gelenkmechanismus miteinander verbunden sind.

4. Die Mopp-Auswringvorrichtung (401c) gemäß Anspruch 1, 2 oder 3, wobei die Druckstücke (428c) als Druckplattenstücke (428c) ausgebildet sind.

5. Ein Mopp und eine Mopp-Auswringvorrichtung, mit
einer Mopp-Auswringvorrichtung (401c) gemäß einem der Ansprüche 1 bis 4, und
einem Mopp (411) mit einem Schwamm-Moppbelag (413) einer erweiterten Breite mit einer Metallplatte der erweiterten Breite, die den Schwamm-Moppbelag (413) hält, wobei die Metallplatte an ihren beiden Endabschnitten mit den Druckerstücken (428c) der Mopp-Auswringvorrichtung (401c) so in Eingriff gebracht werden können, dass der Schwamm-Moppbelag (413) zwischen der Metallplatte und der Aufnahmeplatte (409c) komprimiert werden kann.

## Revendications

1. Essoreuse pour balai (401c) pour essorer l'eau d'un tampon de balai-éponge (413) d'un balai (411), ladite essoreuse pour balai (401c) comprenant :
deux éléments de cadre (402c) ;
un support (406c) fixé à chacun desdits éléments de cadre (402c) de sorte que, lorsque l'essoreuse pour balai (401c) est utilisée, un angle aigu soit formé entre ledit support (406c) respectif et ledit élément de cadre (402c) respectif ;
un élément de pression (428c) fixé à chacun desdits supports (406c) ; et
une plaque de réception (409c) agencée de manière rotative entre lesdits éléments de cadre (402c) en dessous desdits éléments de pression (428c) de sorte qu'un espacement entre lesdits éléments de pression (428c) et ladite plaque de réception (409c) soit inférieur à l'épaisseur du tampon de balai-éponge (413) qui doit être appliqué sur ladite essoreuse pour balai (401c).

2. Essoreuse pour balai (401c) selon la revendication 1, dans laquelle lesdits supports (406c) sont fixés de manière rotative auxdits éléments de cadre (402c) de sorte que, pour une position fixe de ladite essoreuse pour balai (401c) lorsque celle-ci n'est pas utilisée, lesdits supports (406c) puissent être pliés vers lesdits éléments de cadre (402c) de sorte que l'angle formé entre ledit support (406c) respectif et ledit élément de cadre (402c) respectif soit sensiblement égal à zéro degré.

3. Essoreuse pour balai (401c) selon la revendication 1 ou 2, dans laquelle les parties d'extrémité inférieure desdits éléments de cadre (402c) sont reliées entre elles par l'intermédiaire d'un élément de fixation de cadre inférieur, les parties d'extrémité inférieure desdits supports (406c) sont reliées entre elles par l'intermédiaire d'un élément de fixation de support inférieur, et lesdits éléments de cadre (402c) et lesdits supports (406c) sont reliés entre eux par l'intermédiaire d'un mécanisme de charnière.

4. Essoreuse pour balai (401c) selon la revendication 1, 2 ou 3, dans laquelle lesdits éléments de pression (428c) se présentent sous la forme d'éléments formant des plaques de pression (428c).

5. Balai et essoreuse pour balai, comprenant
une essoreuse pour balai (401c) selon l'une quelconque des revendications 1 à 4 ; et
un balai (411) ayant un tampon de balai-éponge (413) présentant une largeur étendue comprenant une plaque métallique, présentant la largeur étendue, sur laquelle est fixé le tampon de balai-éponge (413), la plaque métallique pouvant être en prise au niveau de ses deux parties d'extrémité avec les éléments de pression (428c) de l'essoreuse pour balai (401c) de sorte que le tampon de balai-éponge (413) puisse être comprimé entre la plaque métallique et la plaque de réception (409c).
